Europäisches Patentamt

European Patent Office

Office européen des brevets

(11) Publication number: **0 367 317 B1**

# EUROPEAN PATENT SPECIFICATION

(45) Date of publication of patent specification: **19.05.93**  (51) Int. Cl.⁵: **F16J 15/26**, F16J 15/56

(21) Application number: **89202454.8**

(22) Date of filing: **28.09.89**

(54) **Packing ring assembly for a reciprocating seal.**

(30) Priority: **29.09.88 GB 8822913**

(43) Date of publication of application:
**09.05.90 Bulletin 90/19**

(45) Publication of the grant of the patent:
**19.05.93 Bulletin 93/20**

(84) Designated Contracting States:
**DE FR GB IT NL**

(56) References cited:
**EP-A- 0 139 965**
**US-A- 3 305 241**
**US-A- 3 971 563**

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Botterill, James Arthur
c/o P.O. Box 1 Chester
Cheshire CH1 3SH(GB)**

**EP 0 367 317 B1**

Rank Xerox (UK) Business Services
(3.10/3.6/3.3.1)

## Description

This invention is related to a packing ring assembly for a reciprocating seal.

Packing rings are, for example, used in high pressure reciprocating equipment such as gas compressors, comprising in particular pairs of segmented rings, with the packing ring assembly being subjected to gas pressures up to several thousands of bar. For example, the rings are segmented in two or three parts, in such a pair the segments of one ring being adjacent to sections of the other ring in order to avoid leakage paths through the packing ring assembly as much as possible.

The packing ring assembly can be arranged in a pressure chamber, connected directly to a vessel with a high pressure fluid, e.g. a high pressure gas, or the packing ring assembly is contained in a pressure chamber filled with a sealing fluid, the pressure of which is typically slightly higher than that of the high pressure vessel gas to prevent the high pressure gas from leaking across the packing ring assembly.

The pressure chamber is extending around a rod or piston reciprocating periodically, respectively moving inwardly into and outwardly from said vessel, the inner edges of the chamber being slightly spaced apart from said rod or piston. To position the packing ring assembly incorporated in the pressure chamber sufficiently for sealing purposes the packing ring assembly is pressed both against said rod or piston and against a wall portion of the pressure chamber.

Pressing said rings with their mating inner surfaces engaging the rod can be achieved by means of a spring located on the outer circumference of said ring pair although other possibilities exist.

Pressing said rings with their mating side surfaces against a wall portion can be achieved also by spring action whereas screw action, hydraulically driven cylinder action or other pushing actions are also possible.

Although the sealing behaviour has been improved by using pairs of segmented rings of different type, e.g. suitable combinations of nearly equally sized P−, B−, D− or T−rings, which are generally known and will be described hereinafter, yet the sealing required in the above−mentioned high pressure range is not sufficient, the life time of such a sealing arrangement being unpredictable.

It is therefore an object of this invention to overcome the above−mentioned shortcomings and to provide an improved packing ring assembly for a reciprocating seal wherein leakage from a high−pressure vessel through said packing rings and along said periodically reciprocating rod or piston is highly reduced.

Another object of this invention is to provide an improved packing ring assembly without enlarging the packing unit wherein the segmented ring construction is maintained.

Yet another object of this invention is to provide a packing ring assembly which is subject to less wear than existing seals resulting in a longer seal life.

The invention therefore provides a packing ring assembly for a reciprocating seal, arranged in a pressure chamber extending around a reciprocating rod in high pressure gas compressors, comprising at least two adjacent, differently segmented and nearly equally sized packing rings, with mating inner surfaces contacting the rod and with mating side surfaces normal to the rod, two of which surfaces contacting each other and a third surface arranged against a wall portion of the pressure chamber, and with the other surfaces being subject to high fluid pressure thereby pressing the rings against said rod and said wall portion, characterized in that the contact pressure between mating surfaces is increased by appropriate reduction of the surface areas of contact by machining at least one recess in said mating inner surfaces and/or in said mating side surfaces and ensuring that the recess containing surfaces only communicate with the low pressure side of the seal thus drawing the mating surfaces together.

It is remarked that US−A−3,305,241 discloses a packing ring assembly for a reciprocating seal comprising a plurality of packing rings, wherein the packing rings are provided with a recess in one of the mating surfaces.

However, the specific idea of the invention of increasing contact pressure between mating surfaces by appropriate reduction of the surface areas of contact has not been disclosed.

It is known from US−A−3,971,563 to reduce surface areas and in this manner to change the sealing condition in that recesses have been provided both in the contacting ring surfaces and in the contacted rod surfaces of a rotary shaft. The facing recesses and rims can be shifted mutually thereby varying the contact areas in situ, the contact area being reduced to reduce in turn the frictional heat.

In said prior art a constant pressure exists with varying surface contact. In the situation of great fluid pressure the contact area will be enlarged, and vice versa.

However, the above prior art is different from the present invention wherein the high pressure sealing is effected by reducing the contact area. It is stressed that the recesses in accordance with the present invention can be arranged in said mating inner surfaces and/or in said mating side surfaces.

The present invention will now be described by way of example in more detail by reference to the accompanying drawings in which:

Fig. 1 illustrates the contact pressure σ required to seal a given pressure p of the high pressure fluid or gas.

Figs. 2a – 2d show front views of prior art segmented ring types.

Fig. 3a shows a front view of a ring pair of the invention comprising successively a B – ring and a T – ring; figs. 3b and 3c are cross – sectional views of said BT – ring pair, taken along the line I – I of fig. 3a, illustrating advantageous embodiments of the packing ring assembly in accordance with the present invention.

Fig. 4 shows a cross – sectional view of a sealing arrangement comprising two packing ring assemblies in accordance with the present invention.

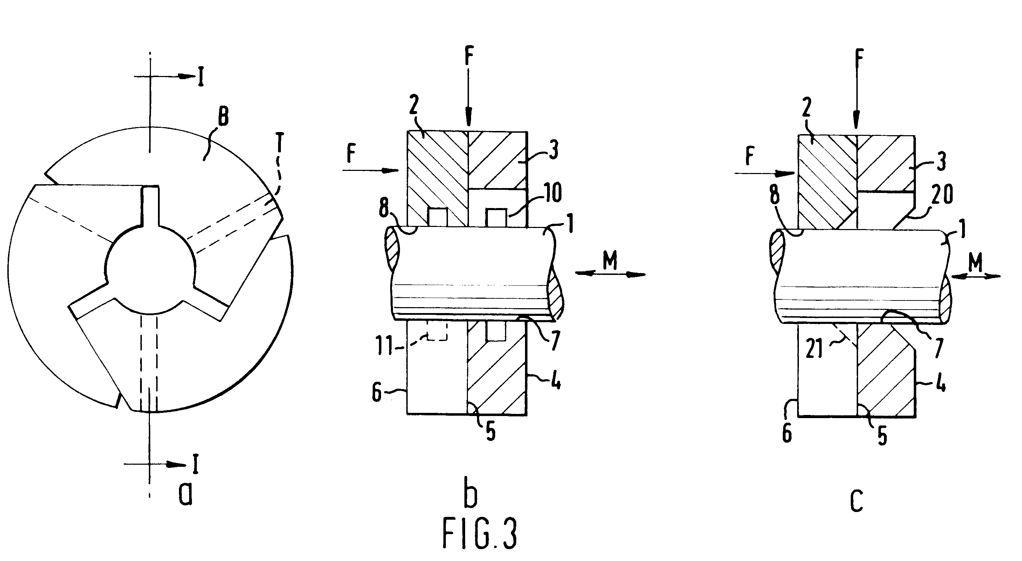

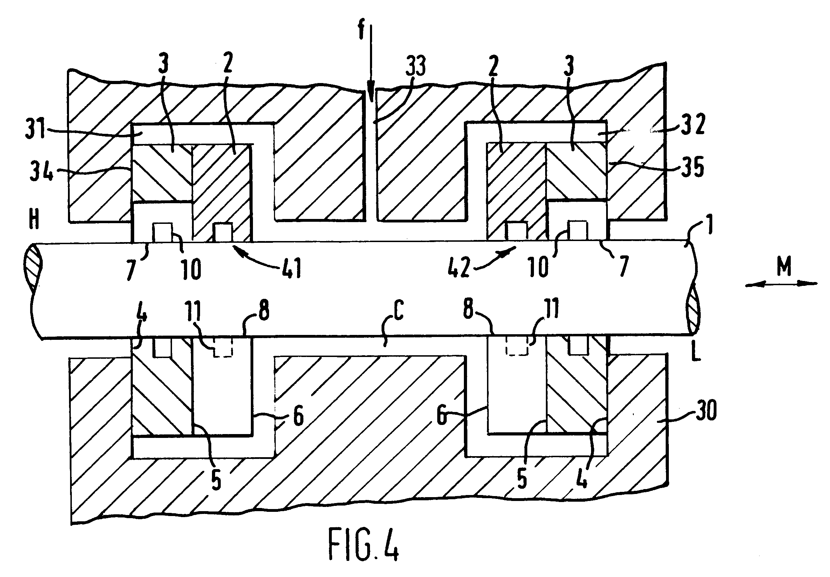

In the figs. 3b, 3c and 4 similar reference numerals are used for corresponding elements.

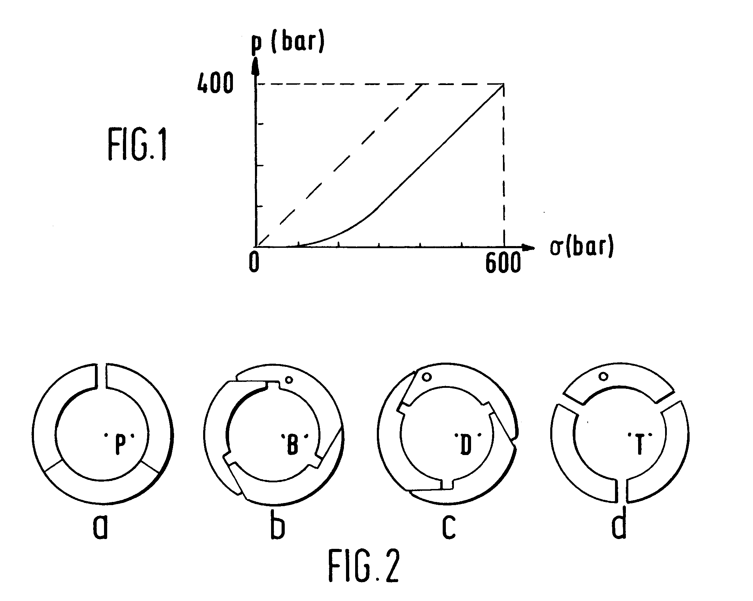

Referring to fig. 1 a graph is shown illustrating the sealing criterion between the pressure p (vertical axis) set up by the high pressure fluid or gas vs. the contact pressure σ (horizontal axis) build up and caused mainly by the high pressure fluid together with the segment construction between a said mating surface and said rod or piston and said wall portion respectively, and also present between adjacent mating surfaces. The dotted line represents the p = σ situation shown only for comparison purposes. The full drawn line is valid for the present conditions wherein sealing only is achieved in the pressure range with σ ≧ 1.5 p.

The ring segmentation is represented in figs. 2a, 2b, 2c and 2d, illustrating four different ways of segmentating a packing ring.

It has been found that closely rod contacting segmented rings of the types as shown in figs. 2a – 2d only locally satisfy said criterion. The gap between two of the segments of the P – ring type of fig. 2a is intended to transfer pressure variations due to fluid flow. However, positive seal cannot be achieved. Positive seal is defined as a seal which as a whole satisfies the above criterion.

In the B – and D – ring type of figs. 2b and 2c the middle portions of the mating inner surface of each segment satisfy the criterion for inwardly high – pressure fluid flow very well. Neither positive seal can be achieved for the overlapping portions with respect to the inwardly flow, nor for the mating side surfaces, the segmentation sections enabling fluid flow in axial direction. For the T – ring type of fig. 2d the same considerations as above are relevant, in that the corresponding middle portions give nearly positive sealing.

In fig. 3a a ring pair, comprising successively a B – ring and a T – ring is shown. By applying a B – ring the rod contacting surface of a segment is reduced, thereby increasing the contact pressure. The aim of using said T – ring is covering the sections between the B – ring segments in order to prevent leakage therethrough.

However, the above mentioned packing assembly does not completely satisfy the above stated requirements for a reciprocating seal under high – pressure conditions, in particular in the range of 0 – 3000 bar to be used.

In accordance with the invention the sealing is considerably improved in that said rings of a BT – pair comprise a recess in their mating surfaces. This is illustrated in figs. 3b and 3c, representing a first and second advantageous embodiment respectively.

One advantageous embodiment is shown in fig. 3b, comprising a reciprocating rod or piston 1, axially moving as indicated by the double pointed arrow M inwardly into and outwardly from a high pressure vessel (not shown for reasons of clarity), the packing ring assembly consisting of a T – ring 2 directed to the high pressure fluid and a B – ring 3 with mating side surface 4 arranged against a wall portion of a pressure chamber (not shown) as mentioned above. In this figure the mating side surfaces 4, 5, 6 are arranged normal to the reciprocating rod 1.

Mating inner surfaces 7, 8 of said B – ring 3 and said T – ring 2 respectively are closely contacting the reciprocating rod 1. Pressing the BT – ring pair against said rod and said wall portion can be achieved mechanically as mentioned above. Pressing means are not shown for reasons of clarity, whereas the pressing action is represented only by arrows F ending upon the ring assembly's upper half.

In this embodiment recesses 10 and 11 in said B – ring 3 and said T – ring 2 respectively are present. As shown the recesses 10, 11 can be considered slot shaped along the inner circumferences recessed in the mating inner surfaces 7, 8 in particular as right – angled slots.

As will be clear for those skilled in the art said recesses can be realized in many ways, e.g. as recesses partially along the inner circumference, or as wedge – shaped slots. Also only one ring can comprise such a recess.

In all these cases the mating surface areas, or one mating surface area, of said surfaces 4, 5, 6, 7, 8 will be reduced, thereby enhancing the contact pressure σ and satisfying the above criterion.

As can be seen in fig. 3c a second advantageous embodiment comprises one sided chamfered mating surfaces 4, 5, 6, 7, 8 resulting in recesses 20, 21. As mentioned above said reces –

ses can be realized in many ways.

Fig. 4 shows partially a cross – sectional view of a sealing arrangement 30 which forms an ad – vantageous embodiment of the present invention. The recesses in accordance with the embodiment of fig. 3b as discussed above are also shown in this figure. The sealing arrangement is positioned between a high pressure space H and a low pres – sure space L. A reciprocating rod or piston 1 is axially moved as indicated by the double pointed arrow M inwardly into and outwardly from the high pressure space H. For example the high pressure space H is said high pressure vessel whereas the low pressure space L is connected with open air.

The sealing arrangement 30 is provided with a fluid pressure chamber C axially extending along the rod 1 and having two portions 31 and 32 in which two packing ring assemblies 41 and 42 re – spectively are arranged. As mentioned above said packing ring assemblies each comprise a B – ring and a T – ring which are contacting the reciprocat – ing rod 1 with their mating inner surfaces. The mating side surfaces 4 are arranged against two wall portions of the pressure chamber C, respec – tively 34 and 35. It will be noticed that other combinations of rings in a packing ring assembly can be used, for example a BD – pair.

The sealing as explained above is effected by fluid pressure exerting said pressing action F, as indicated in figs. 3b and 3c, produced by fluid supplied in any suitable manner into the pressure chamber C through a channel 33 as represented by an arrow f in fig. 4. In order to provide a positive seal for the sealing arrangement as a whole the pressure drop across the sealing arrangement should satisfy the following relation: $p_F > p_H > p_L$.

Then the packing ring assemblies 41 and 42 will be pressed adequately against said wall por – tions 34 and 35 respectively.

## Claims

1. A packing ring assembly for a reciprocating seal, arranged in a pressure chamber extend – ing around a reciprocating rod (1), in high pressure gas compressors, comprising at least two adjacent, differently segmented and nearly equally sized packing rings (2, 3), with mating inner surfaces (7, 8) contacting the rod and with mating side surfaces (4, 5, 6) normal to the rod, two of which surfaces contacting each other and a third surface arranged against a wall portion of the pressure chamber, and with the other surfaces being subject to high fluid pressure thereby pressing the rings against said rod and said wall portion, characterized in that the contact pressure between mating surfaces (4, 5, 6, 7, 8) is increased by appro –

priate reduction of the surface areas of contact by machining at least one recess (10, 11, 20, 21) in said mating inner surfaces (7, 8) and/or in said mating side surfaces (4, 5, 6) and ensuring that the recess containing surfaces only communicate with the low pressure side of the seal thus drawing the mating surfaces together.

2. The packing ring assembly as claimed in claim 1, characterized in that at least one of said mating inner surfaces (7, 8) is chamfered (20, 21) at its one side directed to said wall portion.

3. The packing ring assembly as claimed in claim 1, characterized in that said recess (10, 11) is extending circumferentially.

4. The packing ring assembly as claimed in claim 2; characterized in that said mating inner sur – faces (7, 8) are chamfered (20, 21) along the whole circumference.

5. The packing ring assembly as claimed in any one of the claims 1 or 3, characterized in that said recess (10, 11) is a right – angled slot.

6. The packing ring assembly as claimed in any one of the claims 1 or 3, characterized in that said recess is a wedge – shaped slot.

## Patentansprüche

1. Eine Dichtringanordnung für eine hin – und herbewegbare Dichtung, angeordnet in einer Druckkammer, die sich um eine hin – und herbewegbare Stange (1) erstreckt, in Hoch – druckGaskompressoren, die mindestens zwei nebeneinanderliegende, verschiedentlichseg – mentierte, nahezu gleichgroße Dichtringe (2, 3) aufweist, mit inneren Berührungsflächen (7, 8), welche die Stange berühren, und mit seit – lichen Berührungsflächen (4, 5, 6) senkrecht zu der Stange, von denen sich zwei Flächen ge – genseitig berühren und eine dritte Fläche ge – gen einen Wandungsbereich der Druckkammer angeordnet ist, und wobei die anderen Flächen dem Fluidhochdruck ausgesetzt sind, wodurch die Ringe gegen die Stange und gegen den Wandungsbereich gedrückt werden,
dadurch **gekennzeichnet,**
daß der Berührungsdruck zwischen Berüh – rungsflächen (4, 5, 6, 7, 8) erhöht wird durch angemessene Reduzierung der Berührungs – flächenbereiche durch maschinelles Einarbei – ten mindestens einer Aussparung (10, 11, 20, 21) in die inneren Berührungsflächen (7, 8) und/oder in die seitlichen Berührungsflächen (4, 5, 6) und durch die Gewährleistung, daß die Flächen, welche Aussparungen aufweisen, nur mit der Niederdruckseite der Dichtung in Verbindung stehen, wodurch die Berührungsflächen zusammengezogen werden.

2. Die Dichtringanordnung nach Anspruch 1, dadurch gekennzeichnet, daß zumindest eine der inneren Berührungsflächen (7, 8) eine Abschrägung (20, 21) auf ihrer einen Seite aufweist, welche auf den Wandungsbereich gerichtet ist.

3. Die Dichtringanordnung nach Anspruch 1, dadurch gekennzeichnet, daß die Aussparung (10, 11) sich um den Umfang erstreckt.

4. Die Dichtringanordnung nach Anspruch 2, dadurch gekennzeichnet, daß die inneren Berührungsflächen (7, 8) eine Abschrägung (20, 21) entlang des gesamten Umfang aufweisen.

5. Die Dichtringanordnung nach einem der Ansprüche 1 oder 3, dadurch gekennzeichnet, daß die Aussparung (10, 11) als rechtwinkliger Schlitz ausgebildet ist.

6. Die Dichtringanordnung nach einem der Ansprüche 1 oder 3, dadurch gekennzeichnet, daß die Aussparung als keilförmiger Schlitz ausgebildet ist.

**Revendications**

1. Ensemble garniture d'étanchéité annulaire pour un joint alternatif, disposé dans une chambre de pression qui s'étend autour d'une tige (1) à mouvement alternatif dans des compresseurs à gaz à haute pression, comprenant au moins deux bagues d'étanchéité (2, 3) adjacentes, segmentées différemment et à peu près de même dimension, de façon que leurs surfaces d'appui intérieures (7, 8) soient en contact avec la tige et que leurs surfaces d'appuui latérales (4, 5, 6), orthogonales à la tige, soient en contact entre elles pour deux de ces surfaces et tandis qu'une troisième est disposée contre une partie de paroi de la chambre de pression, les autres surfaces étant exposées à la haute pression du fluide, pour presser ainsi les bagues contre ladite tige et contre ladite partie de paroi, caractérisé en ce que la pression de contact entre les surfaces complémentaires (4, 5, 6, 7, 8) est augmentée bar une réduction appropriée des aires des surfaces de contact, qui est obtenue par usinage d'au moins un évidement (10, 11, 20, 21) dans lesdites surfaces d'appui intérieures (7, 8) et/ou dans lesdites surfaces d'appui latérales (4, 5, 6), et en faisant en sorte que les surfaces présentant les évidements ne communiquent qu'avec le côté de basse pression du joint, pour resserrer ainsi les surfaces d'appui les unes contre les autres.

2. Ensemble garniture d'étanchéité annulaire selon la revendication 1, caractérisé en ce qu'au moins une desdites surfaces d'appui intérieures (7, 8) est chanfreinée (20, 21) sur un côté dirigé vers ladite parrie de paroi.

3. Ensemble garniture d'étanchéité annulaire selon la revendication 1, caractérisé en ce que ledit évidement (10, 11) s'étend circonférentiellement.

4. Ensemble garniture d'étanchéité annulaire selon la revendication 2, caractérisé en ce que lesdites surfaces d'appui intérieures (7, 8) sont chanfreinées (20, 21) sur toute la circonférence.

5. Ensemble garniture d'étanchéité annulaire selon une quelconque des revendications 1 et 3, caractérisé en ce que ledit évidement (10, 11) est une fente rectangulaire.

6. Ensemble garniture d'étanchéité annulaire selon une quelconque des revendications 1 et 3, caractérisé en ce que ledit évidement est une fente en forme de coin.

p (bar)

400

600

σ(bar)

0

FIG.1

'P'     'B'     'D'     'T'

a     b     c     d

FIG.2

FIG.3

a

b

c

FIG.4

EP 0 367 317 B1